# EUROPEAN PATENT APPLICATION

(11) **EP 3 013 098 A1**
(43) Date of publication of application: **27.04.2016**
(21) Application number: 15190495.0
(22) Date of filing: 20.10.2015
(51) Int. Cl.: H04W 48/10

(54) **METHOD AND DEVICE FOR DISPLAYING WIRELESS DEVICE LIST, WIRELESS DEVICE AND BROADCASTING METHOD THEREOF**

(30) Priority: 20.10.2014 CN 201410559790
(71) Applicant: Xiaomi Inc., Beijing 100085 (CN)
(72) Inventor: WAN, Yuzhen, 100085 Beijing (CN); YU, Mingyang, 100085 Beijing (CN); WANG, Shujie, 100085 Beijing (CN)
(74) Representative: Delumeau, François Guy

(57) **Abstract**

The present disclosure relates to a method and a device for displaying wireless device list, a wireless device and a broadcasting method thereof, wherein the method includes: acquiring (301) broadcast information sent from a wireless device, the broadcast information at least including a first field for indicating a name of the wireless device and a second field for indicating a manufacturer of the wireless device; acquiring (302) an identity of the manufacturer of the wireless device according to the second field; and displaying (303) the name of the wireless device and the identity of the manufacturer in a wireless device list. In embodiments of the present disclosure, information contents in the wireless device list are added, thus more information references are provided to the user for selecting wireless devices.

## Description

### TECHNICAL FIELD

The present disclosure relates to a smart terminal technology, and more particularly, to a method and a device for displaying wireless device list, a wireless device and a broadcasting method thereof.

### BACKGROUND

When a user uses a smart terminal, for example, uses his smartphone, the smartphone may acquire information of surrounding wireless devices, such as surrounding WiFi access points or WLAN access points or Bluetooth devices, and probably the user accesses network or transmit information based on the wireless devices. In related art, a common manner is that when the smartphone acquires the information of the wireless devices, a wireless device list will be displayed on the smartphone of the user. The list, for example, includes such information as an identity, a signal intensity and an encryption situation of each surrounding wireless router. But sometimes, the user still feels that the information displayed in the current wireless device list is not explicit enough and the user cannot determine which wireless device should be chosen for access. For example, two devices are displayed in the foregoing wireless device list and information of the two devices on each aspect such as the signal intensity are closer; therefore, it is difficult for the user to determine which wireless device should be chose, which reduces the service efficiency of the wireless network to some degree.

### SUMMARY

In order to overcome the problems in the related art, the present disclosure provides a method and a device for displaying wireless device list, a wireless device and a broadcasting method thereof, so as to add information contents in the wireless device list.

According to a first aspect, the invention relates to a method for displaying wireless device list, including:
acquiring broadcast information sent by a wireless device, the broadcast information at least including a first field for indicating a name of the wireless device and a second field for indicating a manufacturer of the wireless device;
acquiring an identity of the manufacturer of the wireless device according to the second field; and
displaying the name of the wireless device and the identity of the manufacturer in a wireless device list.

In a particular embodiment, the step of acquiring the identity of the manufacturer of the wireless device according to the second field comprises:
looking up a prestored corresponding relation between field information in the second field and the identity of the manufacturer according to the field information to obtain an identity of the manufacturer corresponding to the field information.

In a particular embodiment, the identity of the manufacturer comprises: a text identity of the manufacturer or an icon identity of the manufacturer.

In a particular embodiment, the step of displaying the name of the wireless device and the identity of the manufacturer in the wireless device list comprises:
displaying the identity of the manufacturer after the name of the wireless device in the wireless device list.

In a particular embodiment, the method further comprises: if field information in the second field is empty, at least displaying the name of the wireless device in the wireless device list.

In a particular embodiment, the step of displaying the name of the wireless device and the identity of the manufacturer in the wireless device list comprises: popping up device prompting information only comprising the wireless device, and setting the name of the wireless device and the identity of the manufacturer in the device prompting information to display.

In a particular embodiment, the broadcast information further comprises: at least one of a MAC address, a frequency band, a signal intensity and an encryption mode of the wireless device.

In a particular embodiment, the method further comprises: displaying a signal intensity of the wireless device in the wireless device list.

According to a second aspect, the invention relates to a broadcasting method of wireless device, including:
building a second field for indicating a manufacturer of the wireless device; and
adding the second field in broadcast information and sending the broadcast information, the broadcast information at least including a first field for indicating a name of the wireless device and the second field.

In a particular embodiment, the information processing unit is configured to look up a prestored corresponding relation between field information in the second field and the identity of the manufacturer according to the field information to obtain the identity of the manufacturer corresponding to the field information.

In a particular embodiment, the identity of the manufacturer comprises: a text identity of the manufacturer or an icon identity of the manufacturer.

In a particular embodiment, the information display unit is configured to display the identity of the manufacturer after the name of the wireless device in the wireless device list.

In a particular embodiment, the information acquisition unit is further configured to acquire the broadcast information sent by the wireless device, the second field contained in the broadcast information being empty; and the information display unit is further configured to at least display the name of the wireless device in the wireless device list when the second field acquired by the information acquisition unit is empty.

In a particular embodiment, the broadcast information further comprises: at least one of a MAC address, a frequency band, a signal intensity and an encryption mode of the wireless device.

In a particular embodiment, the information display unit is further configured to display a signal intensity of the wireless device in the wireless device list.

According to a third aspect, the invention relates to a device for displaying wireless device, including:
an information acquisition unit configured to acquire broadcast information sent by a wireless device, the broadcast information at least including a first field for indicating a name of the wireless device and a second field for indicating a manufacturer of the wireless device;
an information processing unit configured to acquire an identity of the manufacturer of the wireless device according to the second field; and
an information display unit configured to display the name of the wireless device and the identity of the manufacturer in a wireless device list.

According to a fourth aspect, the invention relates to a wireless device, including:
an information building unit configured to build a second field for indicating a manufacturer of the wireless device; and
an information sending unit configured to add the second field in broadcast information and send the broadcast information, the broadcast information at least including a first field for indicating a name of the wireless device and the second field.

According to a fifth aspect, the invention relates to device for displaying wireless device, including:
a processor; and
a memory for storing instructions executable by the processor;
wherein the processor is configured to:
   acquire broadcast information sent by a wireless device, the broadcast information at least including a first field for indicating a name of the wireless device and a second field for indicating a manufacturer of the wireless device; acquire an identity of the manufacturer of the wireless device according to the second field; and display the name of the wireless device and the identity of the manufacturer in a wireless device list.

In one particular embodiment, the steps of the method for displaying a wireless device list and/or the steps of the broadcasting method are determined by computer program instructions.

Consequently:
according to a sixth aspect, the invention is also directed to a computer program for executing the steps of a method for displaying a wireless device list when this program is executed by a computer and;
according to a seventh aspect, the invention is also directed to a computer program for executing the steps of a broadcasting method when this program is executed by a computer.

Each of these programs can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present disclosure may include the following advantageous effects: through adding the second field for indicating the manufacturer of the wireless device in the broadcast information sent by the wireless device and displaying the identity of the manufacturer based on the second field, relevant information about the device is added in the wireless device list, and the user is provided with more references to the devices.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 illustrates an application scenario diagram of a method for displaying wireless device list, according to an exemplary embodiment.
Fig. 2 illustrates another application scenario diagram of a method for displaying wireless device list, according to an exemplary embodiment.
Fig. 3 is a flow chart showing a method for displaying wireless device list, according to an exemplary embodiment.
Fig. 4 is a flow chart showing a broadcasting method of a wireless device, according to an exemplary embodiment.
Fig. 5 is a diagram showing a scanning list in a method for displaying wireless device list, according to an exemplary embodiment.
Fig. 6 is a diagram showing an information prompting in a method for displaying wireless device list, according to an exemplary embodiment.
Fig. 7 is a block diagram showing a device for displaying wireless device, according to an exemplary embodiment.
Fig. 8 is a block diagram showing a wireless device, according to an exemplary embodiment.
Fig. 9 is a block diagram showing a terminal, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with some aspects related to the invention as recited in the appended claims.

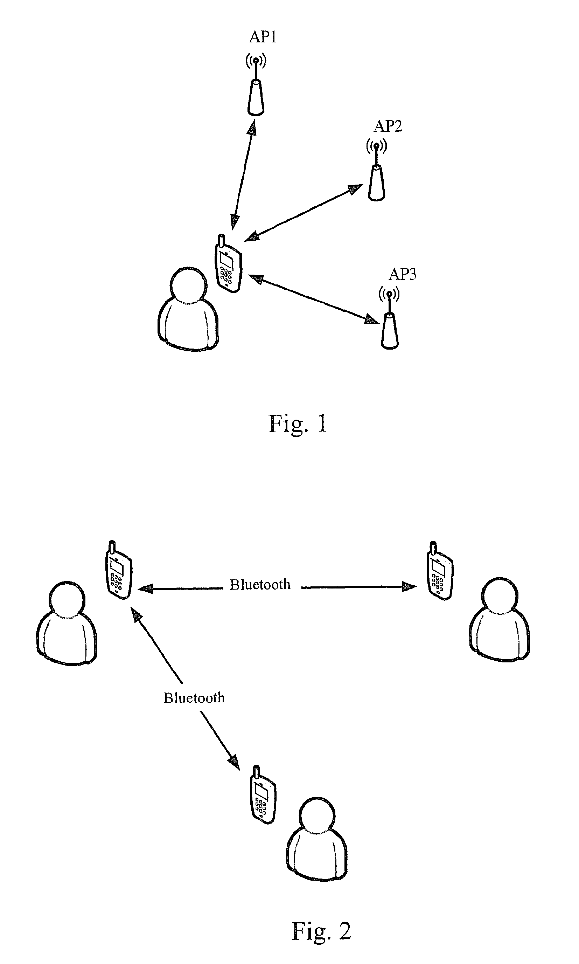

Fig. 1 illustrates an application scenario of a method for displaying wireless device list, according to an embodiment of the present disclosure. In this scenario, a mobile phone used by a user may acquire available wireless signals around. It is supposed that three wireless devices (AP1, AP2 and AP3) are surrounding the user, for accessing wireless network. The mobile phone of the user may acquire broadcast information sent by the foregoing APs, and can display a wireless device list corresponding to the three wireless devices according to the broadcast information. In this way, the method for displaying wireless device list according to the embodiment of the present disclosure will describe how to display the related information of the wireless device to the user.

Fig. 2 illustrates an application scenario of a method for displaying wireless device list according to another embodiment of the present disclosure. In this scenario, the user uses his mobile phone and expects to transmit information with other mobile phones of his friends through a Bluetooth manner, for example, to acquire some photos in the mobile phones of his friends through a Bluetooth manner. At this time, the mobile phone of the user may also acquire surrounding Bluetooth signals, and displays information of two Bluetooth devices as shown in Fig. 2 on the mobile phone. The method for displaying wireless device list according to the embodiment of the present disclosure may also display a Bluetooth device list in this scenario.

The above APs, Bluetooth devices and the like all belong to the wireless devices, and the method for displaying wireless device list according to the embodiments of the present disclosure may be applied to display the wireless devices. Other scenarios will not be illustrated. However, the method of the present disclosure during specific implementation is not limited to the foregoing scenarios of Fig. 1 and Fig. 2, and may be applied to other similar scenarios for displaying wireless signals. Moreover, the user does not necessarily use the mobile phone to acquire the information of the wireless device in the method according to the present disclosure, and may use other terminal devices having the same capability.

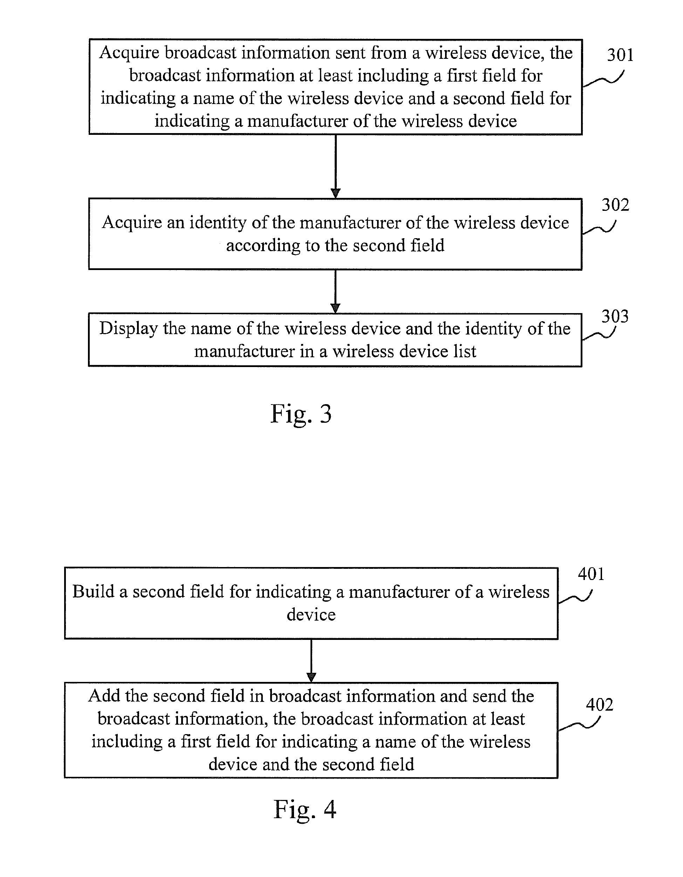

The method for displaying wireless device list according to the embodiments of the present disclosure is performed by a device for displaying wireless device, and the device is arranged in a terminal device. In the following examples, the method for displaying wireless device list according to the present disclosure is explained by taking the mobile phone of the user as an example and taking acquiring surrounding Wifi signals by the mobile phone of the user as an example. The device for displaying wireless device which is used for performing the method is arranged in the mobile phone, and the mobile phone may perform a method as shown in Fig. 3 through the device.

In step 301, broadcast information sent by a wireless device is acquired, the broadcast information at least including a first field for indicating a name of the wireless device and a second field for indicating a manufacturer of the wireless device.

In step 302, an identity of the manufacturer of the wireless device is acquired according to the second field.

In step 303, the name of the wireless device and the identity of the manufacturer are displayed in a wireless device list.

Accordingly, the embodiment of the present disclosure also provides a broadcasting method of wireless device. The method is performed by a wireless device and may be seen in Fig. 4. The method includes the following steps.

In step 401, a second field for indicating a manufacturer of the wireless device is built.

In step 402, the second field is added in broadcast information and the broadcast information is sent, the broadcast information at least including a first field for indicating a name of the wireless device and the second field.

In the procedure of the methods as shown in Fig. 3 and Fig. 4, when the wireless device according to the embodiments of the present disclosure transmits the broadcast information, the field information in the second field for indicating the manufacturer of the wireless device is added in the broadcast information, such that the identity of the manufacturer of the wireless device may be displayed in the wireless device list according to the second field when the user acquires the broadcast information.

As shown in step 401, the wireless device, for example a router, may build a second field according to the manufacturer of the router, the second field being configured to indicate the manufacturer of the wireless device. For example, it is supposed that when producing a Xiaomi router, a second field for representing Xiaomi may be built according to the manufacturer Xiaomi, for example, the field is wps_device_name, and the field information is set as Xiaomi_Router; that is, the Xiaomi_Router is filled in the field of wps_device_name. In step 402, the Xiaomi router carries the foregoing second field when sending broadcast information beacon, and the broadcast information also carries a first field for representing the name of the router, for example, the first field is qijia self-defined by the user.

As described in steps 301-303, after the mobile phone of the user acquires the broadcast information sent by the router and carrying the foregoing first and second fields, the identity of the manufacturer of the wireless device will be acquired according to the second field, and the name of the wireless device and the identity of the manufacturer are displayed in the wireless device list. In particular, still taking the foregoing Xiaomi router as an example, the field information in the second field carried in the broadcast information sent by the router is Xiaomi_Router, and the mobile phone needs to determine the corresponding identity of the manufacturer to be displayed according to the Xiaomi_Router. The identity of the manufacturer may be displayed in various manners, for example, the identity of the manufacturer may include: a text identity of the manufacturer or an icon identity of the manufacturer.

Two optional display manners are illustrated as follows.

One manner is to display the manufacturer by text. For example, the field information in the second field is Xiaomi_Router, and Xiaomi_Router may be directly displayed in the WLAN list. This is a direct display manner. Or, the displayed text may also be "Xiaomi router".

Another manner is to display the manufacturer by icon. For example, the field information in the second field is Xiaomi_Router, and the displayed content may be the icon (LOGO) of Xiaomi.

Optionally, the mobile phone may determine the manner to display the identity of the manufacturer according to the following manners: a corresponding relation between the field information in the second field and the identity of the manufacturer may be stored in the mobile phone in advance; and when the second field in the broadcast information sent by the wireless device is acquired, the corresponding relation may be looked up to obtain the identity of the manufacturer corresponding to the field information in the second field, as shown in the following Table 1.

**Table 1 Corresponding relation between field information and identity of manufacturer**

| Field Information | Identity of Manufacturer |
|---|---|
| *Xiaomi_Router* | *Xiaomi_Router* |
| *Xiaomi_Router* | *Xiaomi router* |
| *Xiaomi_Route* | *Xiaomi LOGO* |

Moreover, in a specific implementation, such as using the above manner of displaying the identity of the manufacturer by text, it is supposed that the mobile phone will directly display the field information in the second field in the broadcast information, then the manufacturer may customize the field information. For example, the sent manufacturer information customized for Xiaomi router is Xiaomi_Router, other manufacturers may also customize their information, and even a certain shopping mall or store may also customize the device identity information sent by the wireless router thereof to be "XX shopping mall" or "XX store" (which may be achieved by notifying the router manufacturer to customize by the shopping mall or the store).

During the specific implementation, the displaying the identity of the manufacturer according to the acquired second field in the broadcast information by the mobile phone may be implemented by a Wifi module in the mobile phone. For example, a framework of an Android Wifi module includes four parts, which are respectively settings, framework, supplicant and kernel. Each part has respective functions. For example, acquiring such information as the signal intensity and encryption mode of the wireless device by scanning may be implemented by the part of kernel, the supplicant layer may read the Wifi data scanned by the part of kernel, and transmit the data to the part of settings in the upper layer and the like for displaying.

The format of the Wifi scanning data acquired by the part of supplicant is as follows:

```
      /**
           * Format of results:
           * =================
           * id=1
            * bssid=68:7f:74:d7:1b:6e
            * freq=2412
            * level=-43
            * tsf=1344621975160944
            * age=2623
            * flags=[WPA2-PSK-CCMP][WPS][ESS]
            * ssid=zubyb
            * ==== */
```

The format includes: bssid (mac address of router), freq (frequency band of router), level (signal intensity), flags (encryption mode) and Ssid (router name). All these information are acquired by the part of kernel and transmitted by the wireless router. The broadcast information sent by the wireless router may include at least one of the above bssid, freq and the like. According to the embodiments of the present disclosure, one field wps_device_name is added in the supplicant layer, for example wps_device_name=Xiaomi_Router; in this way, the supplicant layer acquires Xiaomi_Router, and may transmit the information to the upper layer to display through the field wps_device_name.

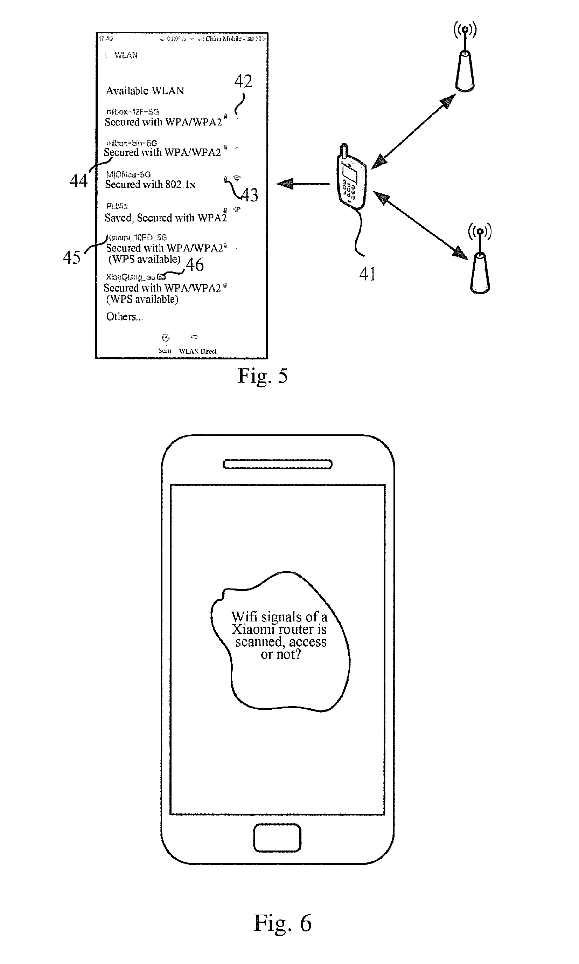

Optionally, Fig. 5 illustrates a manner for displaying a wireless device list. Referring to Fig. 5, after acquiring surrounding Wifi signals, a mobile phone 41 equipped with a device for displaying wireless device displays a WLAN list including a plurality of wireless signal access points as shown in Fig. 5, and displays relevant information of these access points, such as an identity 42 of the signal intensity of the wireless router, an identity 43 indicating whether the wireless router is encrypted, relevant description 44 about the encryption mode, and a name 45 of the wireless router. The information of the wireless router displayed in the embodiment further includes an identity 46 of the manufacturer, the identity of the manufacturer being configured to represent the manufacturer information of the wireless router, i.e. which manufacturer manufactures the router. It can also be seen in Fig. 5 that the identity of the manufacturer may be displayed after the name of the wireless device in the wireless device list.

Certainly, the second field in the broadcast information sent by the wireless router may be empty. In this case, after acquiring the broadcast information, the mobile phone will not display the manufacturer information of the router, for example, the mobile phone may only display the name, the signal intensity of the router, and other device information.

When the method according to the embodiments of the present disclosure is practically applied, the user may view the wireless device list, and determine to choose which wireless router is to be accessed according to the information such as the above-mentioned encryption mode, signal intensity and identity of the manufacturer. For example, when the information of each router is scanned, two or more routers may have similar signal intensities and similar encryption mode. In this case, without the identity of the manufacturer according to the embodiment, the user may be unable to quickly determine the router to be accessed. However, based on the device identity of the wireless router according to the embodiment, the user may select the router of the trusted manufacturer for access. For example, if the user trusts Xiaomi router, then he may select the wireless router of xiaoqiang_ac in the WLAN list to access the network according to the Xiaomi identity displayed in Fig. 4.

Moreover, in other embodiments, if the wireless device is a Bluetooth device, for example, a Bluetooth on a Xiaomi mobile phone, then the identity of the manufacturer displayed by the mobile phone may be the device information of the Bluetooth device, for example, Xiaomi mobile phone.

In another embodiment, the identity of the manufacturer in the embodiments of the present disclosure may be a preset specific identity aiming at a specific wireless device. For example, it may be set that only when the Wifi signal of the Xiaomi wireless router is acquired, access prompting information is popped up to prompt the user. Referring to Fig. 6, a device prompting information is illustrated for prompting the user whether to access the Xiaomi wireless router. In this way, the Xiaomi_Router may be served as a preset specific identity and the following functions are set in the mobile phone: when the preset specific identity is acquired, the specific identity is displayed through the device prompting information via a manner similar to that shown in Fig. 6 for prompting the user to access.

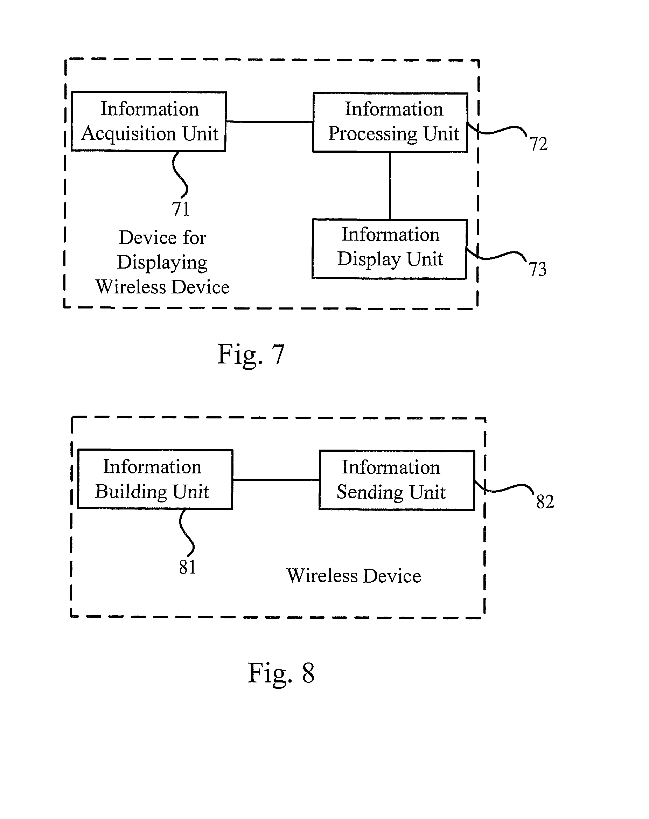

Fig. 7 is a block diagram showing a device for displaying wireless device, according to an exemplary embodiment (in an actual implementation, a corresponding device thereof may be a wireless router, or any other device including a WiFi module). The specific manners for performing operations by individual modules in the device have been described in detail in the embodiments regarding the methods, which will not be elaborated herein. Referring to Fig. 7, the device includes an information acquisition unit 71, an information processing unit 72 and an information display unit 73.

The information acquisition unit 71 is configured to acquire broadcast information sent by a wireless device, the broadcast information at least including a first field for indicating a name of the wireless device and a second field for indicating a manufacturer of the wireless device.

The information processing unit 72 is configured to acquire an identity of the manufacturer of the wireless device according to the second field.

The information display unit 73 is configured to display the name of the wireless device and the identity of the manufacturer in a wireless device list.

For example, the wireless device is a wireless router or a Bluetooth device.

Optionally, the information processing unit 72 is specially configured to look up a corresponding relation between field information and the identity of the manufacturer stored in advance according to the field information in the second field, to obtain the identity of the manufacturer corresponding to the field information.

Optionally, the identity of the manufacturer includes: a text identity of the manufacturer or an icon identity of the manufacturer.

Optionally, the information display unit 73 is specially configured to display the identity of the manufacturer after the name of the wireless device in the wireless device list.

Optionally, the information acquisition unit 71 is also configured to acquire the broadcast information sent by the wireless device, the second field included in the broadcast information being empty; and the information display unit 73 is also configured to at least display the name of the wireless device in the wireless device list when the second field acquired by the information acquisition unit is empty.

Optionally, the broadcast information further includes: at least one of a MAC address, a frequency band, a signal intensity and an encryption mode of the wireless device.

Optionally, the information display unit 73 is specially configured to display the signal intensity of the wireless device in the wireless device list.

Fig. 8 is a block diagram showing a wireless device, according to an exemplary embodiment. The device may include: an information building unit 81 and an information sending unit 82.

The information building unit 81 is configured to build a second field, the second field being configured to indicate a manufacturer of the wireless device.

The information sending unit 82 is configured to add the second field in broadcast information and send the broadcast information, the broadcast information at least including a first field and the second field, the first field being configured to indicate a name of the wireless device.

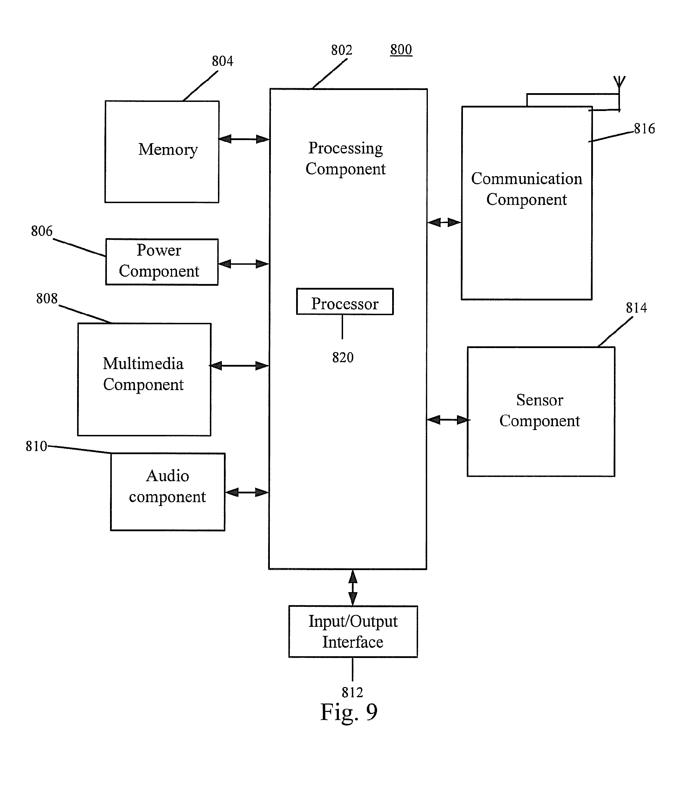

Fig. 9 is a block diagram showing a terminal 800, according to an exemplary embodiment. For example, the terminal 800 may be a mobile phone, a computer, a digital broadcast terminal, a messaging device, a gaming console, a tablet, a medical device, exercise equipment, a personal digital assistant, and the like.

Referring to Fig. 9, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. For example, the 820 is configured to: acquire broadcast information sent by a wireless device, the broadcast information at least including a first field and a second field, the first field being configured to indicate the name of the wireless device, and the second field being configured to indicate the manufacturer of the wireless device; acquire the identity of the manufacturer of the wireless device according to the second field; and display the name of the wireless device and the identity of the manufacturer in a wireless device list. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power in the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components, e.g., the display and the keypad, of the device 800, a change in position of the device 800 or a component of the device 800, a presence or absence of user contact with the device 800, an orientation or an acceleration/deceleration of the device 800, and a change in temperature of the device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In one exemplary embodiment, the communication component 816 receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention should only be limited by the appended claims.

## Claims

1. A method for displaying wireless device list, **characterized in that**, the method comprises:
acquiring (301) broadcast information sent from a wireless device, the broadcast information at least comprising a first field for indicating a name of the wireless device and a second field for indicating a manufacturer of the wireless device;
acquiring (302) an identity of the manufacturer of the wireless device according to the second field; and
displaying (303) the name of the wireless device and the identity of the manufacturer in a wireless device list.

2. The method according to claim 1, **characterized in that**, the step of acquiring the identity of the manufacturer of the wireless device according to the second field comprises:
looking up a prestored corresponding relation between field information in the second field and the identity of the manufacturer according to the field information to obtain an identity of the manufacturer corresponding to the field information.

3. The method according to claim 1 or 2, **characterized in that**, the identity of the manufacturer comprises: a text identity of the manufacturer or an icon identity of the manufacturer.

4. The method according to any one of claims 1 to 3, **characterized in that**, the step of displaying the name of the wireless device and the identity of the manufacturer in the wireless device list comprises:
displaying the identity of the manufacturer after the name of the wireless device in the wireless device list.

5. The method according to any one of claims 1 to 4, **characterized in that**, the method further comprises: if field information in the second field is empty, at least displaying the name of the wireless device in the wireless device list.

6. The method according to any one of claims 1 to 5, **characterized in that**,
the step of displaying the name of the wireless device and the identity of the manufacturer in the wireless device list comprises: popping up device prompting information only comprising the wireless device, and setting the name of the wireless device and the identity of the manufacturer in the device prompting information to display.

7. The method according to any one of claims 1 to 6, **characterized in that**, the broadcast information further comprises: at least one of a MAC address, a frequency band, a signal intensity and an encryption mode of the wireless device.

8. The method according to any one of claims 1 to 7, **characterized in that**, the method further comprises: displaying a signal intensity of the wireless device in the wireless device list.

9. A broadcasting method implemented by wireless device, **characterized in that**, the method comprises:
building (401) a second field for indicating a manufacturer of a wireless device; and
adding (402) the second field in broadcast information and sending the broadcast information, the broadcast information at least comprising a first field for indicating a name of the wireless device and the second field.

10. A device for displaying wireless device, **characterized in that**, the device comprises:
an information acquisition unit (71) configured to acquire broadcast information sent by a wireless device, the broadcast information at least comprising a first field for indicating a name of the wireless device and a second field for indicating a manufacturer of the wireless device;
an information processing unit (72) configured to acquire an identity of the manufacturer of the wireless device according to the second field; and
an information display unit (73) configured to display the name of the wireless device and the identity of the manufacturer in a wireless device list.

11. A wireless device, **characterized in that**, the device comprises:
an information building unit (81) configured to build a second field for indicating a manufacturer of the wireless device; and
an information sending unit (82) configured to add the second field in broadcast information and send the broadcast information, the broadcast information at least comprising a first field for indicating a name of the wireless device and the second field.

12. A device for displaying wireless device, **characterized in that**, the device comprises:
a processor; and
a memory for storing instructions executable by the processor;
wherein the processor is configured to:
acquire broadcast information sent by a wireless device, the broadcast information at least comprising a first field for indicating a name of the wireless device and a second field for indicating a manufacturer of the wireless device; acquire an identity of the manufacturer of the wireless device according to the second field; and display the name of the wireless device and the identity of the manufacturer in a wireless device list.

13. A computer program including instructions for executing the steps of a method for displaying wireless device list to any one of claims 1 to 8 when said program is executed by a computer.

14. A computer program including instructions for executing the steps of a broadcasting method according to claim 9 when said program is executed by a computer.

15. A recording medium readable by a computer and having recorded thereon :
- a computer program including instructions for executing the steps of a remote method for displaying wireless device list according to any one of claims 1 to 8; or
- a computer program including instructions for executing the steps of a broadcasting method according to claim 9 when said program is executed by a computer.
